Europäisches Patentamt

European Patent Office

Office européen des brevets

(11) Veröffentlichungsnummer: **0 223 006**
B1

(12) **EUROPÄISCHE PATENTSCHRIFT**

(45) Veröffentlichungstag der Patentschrift:
20.06.90

(51) Int. Cl.⁵: **H02K 5/167**, H02K 15/16

(21) Anmeldenummer: 86112717.3

(22) Anmeldetag: 15.09.86

(54) Anordnung zur Einstellung des Axialspiels zwischen dem Rotor und dem Stator eines Elektromotors.

(30) Priorität: 26.09.85 DE 3534331

(43) Veröffentlichungstag der Anmeldung:
27.05.87 Patentblatt 87/22

(45) Bekanntmachung des Hinweises auf die Patenterteilung:
20.06.90 Patentblatt 90/25

(84) Benannte Vertragsstaaten:
DE FR GB IT

(56) Entgegenhaltungen:
FR-A- 2 363 921
US-A- 4 326 333

(73) Patentinhaber: Siemens Aktiengesellschaft,
Wittelsbacherplatz 2, D-8000 München 2(DE)

(72) Erfinder: Adam, Peter, Allerseeweg 25,
D-8706 Höchberg(DE)
Erfinder: Gleixner, Ronald, Hübnerweg 21,
D-8703 Ochsenfurt(DE)

**Beschreibung**

Die Erfindung bezieht sich auf eine Anordnung zur Einstellung des Axialspiels zwischen dem Rotor und dem Stator eines Kommutatormotors gemäß Oberbegriff des Anspruchs 1 bzw. des Anspruchs 5; eine derartige Anordnung ist durch die EP-PS 00 65 585, insbes. Anspruch 4 und Fig. 2 bekannt.

Im bekannten Fall der EP-PS 00 65 585 dient zur Einstellung des Axialspiels eine auf die Rotorwelle aufgedrückte Distanzhülse, die mit ihrem dem Rotorblechpaket zugewandten Ende in eine konzentrische Ausnehmung einer an der Stirnseite des Rotorblechpaketes anliegenden Isolierendscheibe mit einer dem jeweiligen Axialspiel entsprechenden axialen Eintauchtiefe einpreßbar ist.

Gemäß vorliegender Erfindung soll eine Anordnung zur besonders einfachen und insbesondere durch Handhabungsautomaten möglichen Einstellung des Axialspiels zwischen dem Rotor und dem Stator eines Elektromotors geschaffen werden. Die Lösung dieser Aufgabe gelingt bei einer Anordnung der eingangs genannten Art erfindungsgemäß durch die Lehre des Anspruchs 1 bzw. des Anspruchs 5; die Unteransprüche kennzeichnen jeweils vorteilhafte Ausgestaltungen der Erfindung.

Die erfindungsgemäße Anordnung erlaubt bei gleichzeitig geringer axialer Baugröße die Einstellung des Axialspiels ohne jegliche zusätzliche Bauteile sowie Meßwertstationen zum Vergleich von jeweils gegebenen Ist- bzw. Soll-Axialspiel und in einer zum Einsatz von Manipulatoren besonders vorteilhaften, nur axialen Handhabungsrichtung, in der auch die übrigen beim Zusammenbau des Motors gegenseitig zu verbindenden Bauteile zugeführt werden, wobei für diese an sich vorhandenen und zu einem bisher nicht vorgesehenen Zweck mitbenutzten Bauteile keiner Sonderkonstruktionen bedürfen.

Das Rotorblechpaket bzw. der Kommutator ist jeweils in vorteilhafter Weise im Preßsitz zur Rotorwelle gehalten und zur Einstellung des Axialspiels durch einen axialen, über der gegebenenfalls vorhandenen betriebsmäßigen Axialbelastung hinausgehenden Druck relativ zur Rotorwelle entsprechend dem geforderten Axialspiel verschiebbar. Dabei wird im Fall des als Verschiebehülse mitbenutzten Rotorblechpaketes in für eine besonders einfache Einstellung des Axialspiels zweckmäßige Weise ausgehend von einer axialspielfreien Montage von Rotor und Stator das Rotorblechpaket in der einen Richtung gegen die eine Lageraufnahme axial abgestützt und das Axialspiel durch Verschieben der Rotorwelle in dieser einen Richtung relativ zum Rotorblechpaket zwischen einem fest auf der Rotorwelle montierten Anlaufteil und der anderen Lageraufnahme gebildet.

Bei der erfindungsgemäßen Einstellung des Axialspiels mit Hilfe eines verschiebbar auf der Welle im Preßsitz gehaltenen Kommutators wird ausgehend von einer axialspielfreien Montage von Rotor und Stator zur Einstellung des Axialspiels das Rotorblechpaket in der einen Richtung gegen die eine Lageraufnahme axial abgestützt und das Axialspiel durch Verschieben der Rotorwelle in Gegenrichtung zu der einen Richtung relativ zum Kommutator zwischen dem Kommutator und der anderen Lageraufnahme gebildet. Es ist ersichtlich, daß damit in besonders einfacher Weise nach dem Zusammenbau von Rotor und Stator lediglich durch einen von außen zu betätigenden Einstellvorgang der Rotor bzw. die Rotorwelle um das bestimmte, von den jeweils im Einzelfall anfallenden Toleranzmaßnahmen unabhängige Axialspielmaß axial verschoben werden muß.

Zur gewährleisteten Einhaltung des einmal eingestellten Axialspiels auch bei betriebsmäßiger axialer Druckbelastung auf die Rotorwelle genügt in der Regel der Preßdruck zwischen einstellbarem Rotorblechpaket bzw. Kommutator und der Rotorwelle; zur Sicherung des eingestellten Axialspiels bei Einsatz der Motoren für eine extreme axiale Betriebsbelastung, insbesondere bei einer stoßartigen Axialbelastung der Rotorwelle, kann nach einer Ausgestaltung der Erfindung ein zusätzliches Fixieren des Rotorblechpaketes bzw. des Kommutators, z.B. durch Verkleben oder Verschweißen, mit der Rotorwelle vorgesehen werden.

Die Erfindung sowie weitere vorteilhafte Ausgestaltungen der Erfindung werden im folgenden anhand schematisch dargestellter Ausführungsbeispiele in der Zeichnung näher erläutert; darin zeigen:

Fig. 1 einen axialen Längsschnitt durch einen dauermagneterregten Kleinmotor in axialspielfreier Montage von Rotor und Stator;

Fig. 2 die Anordnung gemäß Fig.1 mit durch relatives Verschieben von Rotorblechpaket zu Rotorwelle eingestelltem Axialspiel;

Fig. 3 die Anordnung gemäß Fig.1 mit durch relatives Verschieben von Kommutator zur Rotorwelle eingestelltem Axialspiel.

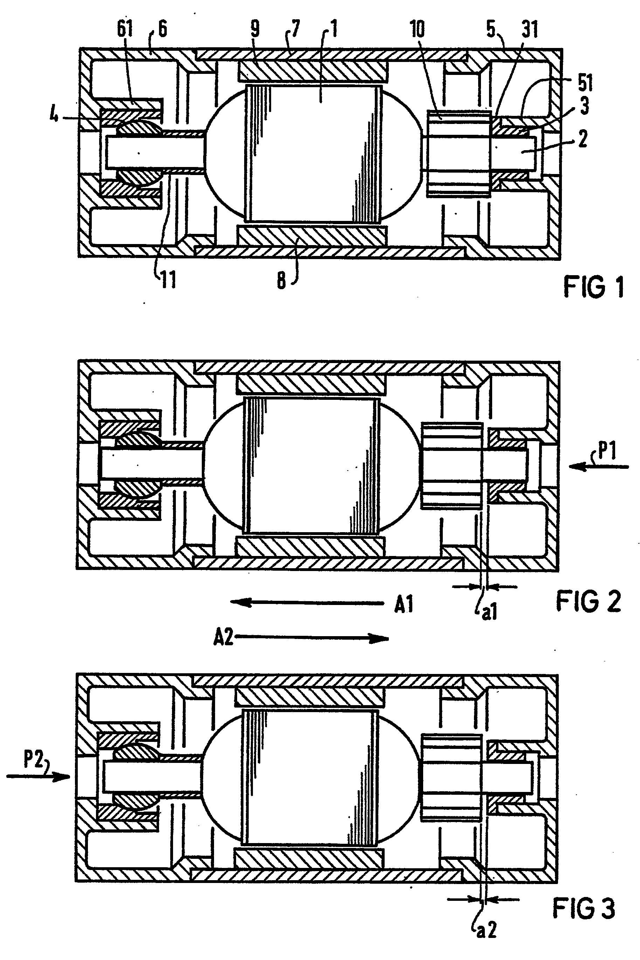

Die Figuren 1 bis 3 zeigen einen Dauermagnet-Kommutatormotor. An der Innenumfangsfläche des Statorgehäuses 7 sind das Magnetfeld erzeugende Dauermagnetschalen 8,9 angeordnet. Beim fertigmontierten Motor sind an beiden stirnseitigen Enden des Statorgehäuses 7 je ein Lagerbügel 5 bzw.6 befestigt. Der linke Lagerbügel 6 nimmt dabei in einer Lageraufnahme 61 ein übliches Kalottenlager 4 auf; im rechten Lagerbügel 5 ist in einer angeformten Lagerhülse 51 ein Zylinderlager 3 eingedrückt. Zwischen Kalottenlager 4 und gegenüberliegender Stirnseite des Rotorblechpaketes 1 ist eine Distanzhülse 11 angeordnet. In den Lagern 5,6 ist eine das bewickelte Rotorblechpaket 1, einen Kommutator 10 und die Lagerhülse 11 aufnehmende Rotorwelle drehbar gelagert.

Fig.1 zeigt den zusammengebauten Motor mit axialspielfreier Anordnung des Rotors zwischen den beiden stirnseitigen Lagerschilden 5 bzw. 6. Diese axialspielfreie Lagerung ergibt sich beim Zusammenbau z.B. dadurch automatisch, daß bei axialer Überlänge der von der Rotorwelle 2 gehaltenen Bauteile beim Aufdrücken der Lagerschilde 5,6 in ihre endgültige Lage am Motorgehäuse 7 entweder das an der linken Lageraufnahme abgestützte Rotorblechpaket oder der an der rechten Lageraufnahme abgestützte Kommutator relativ zur Rotorwelle verschieblich angeordnet sind.

Die Einstellung des Axialspiels mit Hilfe des als Verschiebehülse mitbenutzten Rotorblechpaketes 1 ist in Fig.2 dargestellt. Das Rotorblechpaket 1 ist an der linken Lageraufnahme 61 über das als Festlager installierte Kalottenlager 4 und die Distanzhülse 11 abgestützt. Der Kommutator 10 ist fest auf der Welle angeordnet und liegt im axialspielfreien Montagezustand gemäß Fig.1 mit seiner rechten Stirnseite an einem Anlaufbund 31 des Zylinderlagers 3 an. Durch einen axialen Zusatzdruck P1 auf das rechte stirnseitige Ende der Rotorwelle 2 wirden nun zur Axialspielseinstellung der Rotor in der einen Richtung A1 um das Axialspiel a1 nach links gedrückt; dabei verschiebt sich das an der linken Lageraufnahme 61 abgestützte Rotorblechpaket 1 nach rechts in Richtung auf den in fest auf der Rotorwelle 2 montierten Kommutator 10. Zwischen der rechten Stirnfläche des Kommutators 10 und der linken Stirnfläche des Anlaufbundes 31 des als Festlager installierten Zylinderlagers 3 ist dann durch die vorbeschriebene einfache Maßnahme das richtige Axialspiel a1 eingestellt.

Die Einstellung des Axialspiels mit Hilfe des als Verschiebehülse mitbenutzten Kommutators 10 ist in Fig.3 dargestellt. Das Rotorblechpaket 1 ist wiederum an der linken Lageraufnahme 61 über das als Festlager installierte Kalottenlager 4 und die Distanzhülse 11 abgestützt. Das Rotorblechpaket 1 ist fest auf der Rotorwelle 2 fixiert. Der Kommutator liegt zunächst im axialspielfreien Montagezustand gemäß Fig.1 mit seiner rechten Stirnseite an der linken Stirnseite des Anlaufbundes 31 des in der Lageraufnahme 51 als Festlager installierten Zylinderlagers 3 an. Durch einen axialen Zusatzdruck P2 auf das linke stirnseitige Ende der Rotorwelle 2 wird nun zur Axialspieleinstellung der Rotor in der Gegenrichtung A2 um das Axialspiel a2 nach rechts gedrückt; dabei verschiebt sich der im Preßsitz zur Rotorwelle 2 gehaltene Kommutator um das Axialspiel a2 nach links relativ zur Rotorwelle 2. In Fig.3 ist die Rotorwelle wieder nach links in ihrem Ausgangszustand gemäß Fig.1 zurückverlagert dargestellt, so daß in der Darstellung gemäß Fig.3 zwischen der rechten Stirnseite des Kommutators 10 und der linken Stirnseite des Anlaufbundes 31 das Axialspiel a2 entsprechend der axialen Bewegung des Rotors aufgrund der Kraft P2 erscheint.

Zweckmäßigerweise werden die einzelnen Bauteile entlang einer senkrechten Aufbauachse ausgehend von dem Lagerschild 6 als Auflage montiert; dadurch ergibt sich die axialspielfreie Ausgangslage von zusammengebautem Rotor und Stator von selbst.

## Patentansprüche

1. Anordnung zur Einstellung des Axialspiels zwischen dem Rotor und dem Stator eines Kommutatormotors mittels eines zur Einstellung des Axialspiels relativ zur Rotorwelle (2) axial verschiebbaren, jedoch betriebsmäßig auf der Rotorwelle fest angeordneten Verschiebehülse, **dadurch gekennzeich-**

net, daß als Verschiebehülse das Rotorblechpaket (1) selbst vorgesehen ist.

2. Anordnung nach Anspruch 1, **dadurch gekennzeichnet**, daß das Rotorblechpaket (1) im Preßsitz zur Rotorwelle (2) gehalten und zur Einstellung des Axialspiels durch axialen, über der betriebsmäßigen Axialbelastung liegenden Druck (P1) relativ zur Rotorwelle (2) verschiebbar ist.

3. Anordnung nach Anspruch 1 und/oder 2, **dadurch gekennzeichnet**, daß ausgehend von einer axialspielfreien Montage von Rotor mit Stator zur Einstellung des Axialspiels das Rotorblechpaket (1) in der einen Richtung (A1) gegen die eine Lageraufnahme (61) axial abgestützt und das Axialspiel durch Verschieben der Rotorwelle (2) in dieser einen Richtung (A1) relativ zum Rotorblechpaket (1) zwischen einer fest auf diesem montierten Anlaufteil (Kommutator 10) und der anderen Lageraufnahme (51) gebildet ist (Fig.1,2).

4. Anordnung nach zumindest einem der Ansprüche 1 bis 3, **dadurch gekennzeichnet**, daß das Rotorblechpaket (1) in seiner eingestellten Lage zusätzlich relativ zur Rotorwelle (2), insbesondere durch Verkleben oder Verschweißen, fixiert ist.

5. Anordnung zur Einstellung des Axialspiels zwischen dem Rotor und dem Stator eines Kommutatormotors mittels einer zur Einstellung des Axialspiels relativ zur Rotorwelle (2) axial verschiebbaren, jedoch betriebsmäßig auf der Rotorwelle fest angeordneten Verschiebehülse, **dadurch gekennzeichnet**, daß als Verschiebehülse der Kommutator (10) selbst vorgesehen ist.

6. Anordnung nach Anspruch 5, **dadurch gekennzeichnet**, daß der Kommutator (10) im Preßsitz zur Rotorwelle (2) gehalten und zur Einstellung des Axialspiels durch axialen, über der betriebsmäßigen Axialbelastung liegenden Druck (P2) relativ zur Rotorwelle (2) verschiebbar ist.

7. Anordnung nach Anspruch 5 und/oder 6, **dadurch gekennzeichnet**, daß ausgehend von einer axialspielfreien Montage von Rotor mit Stator zur Einstellung des Axialspiels das Rotorblechpaket (1) in der einen Richtung (A1) gegen die eine Lageraufnahme (61) axial abgestützt und das Axialspiel (a2) durch Verschieben der Rotorwelle (2) in Gegenrichtung (A2) zu der einen Richtung (A1) relativ zum Kommutator (10) zwischen dem Kommutator (10) und der anderen Lageraufnahme (51) gebildet ist.

8. Anordnung nach zumindest einem der Ansprüche 5 bis 7, **dadurch gekennzeichnet**, daß der Kommutator (10) in seiner eingestellten Lage zusätzlich relativ zur Rotorwelle (2), insbesondere durch Verkleben oder Verschweißen, fixiert ist.

## Claims

1. An arrangement for adjusting the axial play between the rotor and the stator of a commutator motor by means of a movable sleeve that is axially displaceable relative to the rotor shaft (2) for adjusting the axial play, but in operation is secured to the rotor shaft, characterised in that the movable sleeve is the rotor stack (1) itself.

2. An arrangement according to claim 1, characterised in that the rotor stack (1) is press fit to the rotor shaft (2), and for adjusting the axial play can be displaced relative to the rotor shaft (2) by means of axial pressure (P1) exceeding the operational axial load.

3. An arrangement according to claim 1 and/or claim 2, characterised in that starting from an assembly of the rotor and the stator free of axial play, for adjusting the axial play the rotor stack (1) is braced axially in one direction (A1) against one bearing sleeve (61) and the axial play is formed by displacing the rotor shaft (2) in said one direction (A1) relative to the rotor stack (1) between a thrust part (commutator 10) securely mounted thereon and the other bearing sleeve (51) (Fig. 1, 2).

4. An arrangement according to at least one of claims 1 to 3, characterised in that the rotor stack (1) is additionally fixed in its adjusted position relative to the rotor shaft (1), in particular by cementing or welding.

5. An arrangement for adjusting the axial play between the rotor and the stator of a commutator motor by means of a movable sleeve that is axially displaceable relative to the rotor shaft (2) for adjusting the axial play, but in operation is secured to the rotor shaft, characterised in that the movable sleeve is the commutator (10) itself.

6. An arrangement according to claim 5, characterised in that the commutator (10) is press fit to the rotor shaft (2) and can be displaced relative to the rotor shaft (2) for adjusting the axial play by axial pressure (P2) exceeding the operational axial load.

7. An arrangement according to claim 5 and/or claim 6, characterised in that starting from an assembly of the rotor and stator free of axial play, for adjusting the axial play the rotor stack (1) is braced axially in one direction (A1) against one bearing sleeve (61) and the axial play (a2) is formed by displacing the rotor shaft (2) in the direction (A2) opposite to said one direction (A1) relative to the commutator (10) between the commutator (10) and the other bearing sleeve (51).

8. An arrangement according to at least one of claims 5 to 7, characterised in that the commutator (10) is additionally fixed in its adjusted position relative to the rotor shaft (2), in particular by cementing or welding.

**Revendications**

1. Dispositif pour régler le jeu axial entre le rotor et le stator d'un moteur à collecteur à l'aide d'un manchon de déplacement, déplaçable axialement pour régler le jeu axial par rapport à l'arbre (2) du rotor, mais monté fixe en fonctionnement sur cet arbre, caractérisé par le fait que le paquet de tôles rotoriques (1) lui-même est prévu comme manchon de déplacement.

2. Dispositif suivant la revendication 1, caractérisé par le fait que le paquet de tôles rotoriques (1) est maintenu selon un ajustement serré sur l'arbre (2) du rotor et peut être déplacé par rapport à l'arbre (2) du rotor, pour le réglage du jeu axial, sous l'action d'une pression axiale (P1) supérieure à la charge axiale appliquée en fonctionnement.

3. Dispositif suivant la revendication 1 et/ou 2, caractérisé par le fait qu'à partir d'un montage, sans jeu axial, du rotor et du stator, pour le réglage du jeu axial, le paquet de tôles rotoriques (1) prend appui axialement, dans une direction (a1), contre un logement de palier (61), et le jeu axial est formé par déplacement de l'arbre (2) du rotor dans cette direction (1) par rapport au paquet de tôles rotoriques (1) entre un élément de butée (collecteur 10) monté fixe sur ce paquet de tôles rotoriques et l'autre logement de palier (51) (figures 1, 2).

4. Dispositif suivant au moins l'une des revendications 1 à 3, caractérisé par le fait que dans sa position réglée, le paquet de tôles rotoriques (1) est en outre fixé par rapport à l'arbre (1) du rotor, notamment par collage ou soudage.

5. Dispositif pour régler le jeu axial entre le rotor et le stator d'un moteur à collecteur à l'aide d'un manchon de déplacement, déplaçable axialement pour régler le jeu axial par rapport à l'arbre (2) du rotor, mais monté fixe en fonctionnement sur cet arbre, caractérisé par le fait que le collecteur (10) lui-même est prévu comme manchon de déplacement.

6. Dispositif suivant la revendication 5, caractérisé par le fait que le collecteur (10) est maintenu selon un ajustement serré sur l'arbre (2) du rotor et peut être déplacé par rapport à l'arbre (2) du rotor, pour le réglage du jeu axial, sous l'action d'une pression axiale (P1) supérieure à la charge axiale appliquée en fonctionnement.

7. Dispositif suivant la revendication 5 et/ou 6, caractérisé par le fait qu'à partir d'un montage, sans jeu axial, du rotor et du stator, pour le réglage du jeu axial, le paquet de tôles rotoriques (1) prend appui axialement, dans une direction (A1), contre un logement de palier (61), et le jeu axial (a2) est formé par déplacement de l'arbre (2) du rotor dans la direction (A2) opposée à la direction (A1) par rapport au collecteur (10), entre ce dernier et l'autre logement de palier (51).

8. Dispositif suivant au moins l'une des revendications 5 à 7, caractérisé par le fait que, dans sa position réglée, le collecteur (10) est en outre fixé par rapport à l'arbre (2) du rotor, notamment par collage ou soudage.

FIG 1

FIG 2

FIG 3